# EUROPÄISCHE PATENTSCHRIFT

(11) **EP 2 626 268 B1**
(45) Veröffentlichungstag und Bekanntmachung des Hinweises auf die Patenterteilung: **03.10.2018**
(21) Anmeldenummer: 13152622.0
(22) Anmeldetag: 25.01.2013
(51) Int. Cl.: B60W 30/095, B60W 50/14, B60R 1/074, B60W 50/16

(54) **Vorrichtung zum Schutz der Außenspiegel beim KFZ vor Kollision mit seitlichen Hindernissen**
Device for protecting the outside mirror of a motor vehicle from collision with obstacles on the side
Dispositif de protection du rétroviseur d'un véhicule automobile contre une collision avec des obstacles latéraux

(30) Priorität: 09.02.2012 DE 102012201905
(43) Veröffentlichungstag der Anmeldung: 14.08.2013
(73) Patentinhaber: ROBERT BOSCH GMBH, 70442 Stuttgart (DE)
(72) Erfinder: Gruetzmann, Andreas, 70176 Stuttgart (DE); Cai, Jing, 215021 Suzhou (CN); Fehse, Meike, 71277 Rutesheim (DE)

(56) Entgegenhaltungen:
- EP-A1- 2 189 811
- DE-A1- 10 128 792
- DE-A1-102009 032 541
- DE-U1-202005 006 903

## Beschreibung

Die vorliegende Erfindung betrifft ein Verfahren zum Schutz eines außen an einem Fahrzeug angeordneten Objektes sowie eine Vorrichtung zum Schutz eines außen an einem Fahrzeug angeordneten Objektes.

### STAND DER TECHNIK

Es ist in der modernen Fahrzeugtechnik grundsätzlich bekannt, dem Fahrer eines Fahrzeuges Fahrerassistenzsysteme zur Unterstützung beim Führen des Fahrzeuges zur Verfügung zu stellen. Insbesondere sind dabei Fahrerassistenzsysteme bekannt, die den Fahrer auf mögliche Kollisionen mit Objekten in der Umgebung des Fahrzeuges hinweisen. So sind zum Beispiel Systeme mit Abstandsmessungen in Parksituationen bekannt, die insbesondere bei einer Rückwärtsfahrt des Fahrzeuges den Fahrer, zum Beispiel akustisch, auf Kollisionsgefahren mit Objekten in Fahrtrichtung des Fahrzeuges hinweisen.

Abgesehen von Parksituationen sind auch Fahrerassistenzsysteme bekannt, die den Fahrer während der Fahrt des Fahrzeuges unterstützen und ihn vor möglichen Gefahren, insbesondere vor Kollisionsgefahren, warnen. So ist beispielsweise aus der DE 10 2006 045 167 A1 ein Fahrerassistenzsystem mit einer Abstandsregel- und Kollisionswarnfunktion für Kraftfahrzeuge bekannt. Das Fahrerassistenzsystem überwacht dabei während der Fahrt des Fahrzeuges die Umgebung des Fahrzeuges und warnt den Fahrer des Fahrzeuges vor möglichen Kollisionen mit detektierten Hindernissen. Auch aus der DE 101 60 189 A1 ist ein ähnliches Fahrerassistenzsystem und ein Verfahren zur Erfassung von vor einem Fahrzeug befindlichen Hindernissen bekannt. Bei diesem System ist es ebenfalls vorgesehen, die Fahrbewegung des Fahrzeuges, das heißt die Fahrtrichtung und/oder die Geschwindigkeit des Fahrzeuges umgebungsabhängig in die Vorausberechnung einer möglichen Kollision mit einem detektierten Hindernis mit einzubeziehen.

Die DE 101 28 792 A1 offenbart einen Kollisionsschutz für Fahrzeuge, bei welchem der benötigte Fahrraum, welcher durch das Ausschwenken von Überhängen benötigt wird, aus Abmaßen des Fahrzeuges inklusive der Abmaße weiterer Fahrzeugteile berechnet wird. Auch sich variierende Werte, wie beispielsweise der Lenkwinkel werden ermittelt und kontinuierlich aktualisiert. Des Weiteren werden dynamische Werte der Fahrsituation, wie die Geschwindigkeit, Bremswerte usw. ermittelt. Um die räumliche Umgebung des Fahrzeuges zu erfassen, wird beispielswese mittels GPS oder Sensoren der vorhandene Fahrraum und insbesondere die räumliche Umgebung ermittelt. Auch das Bilden von Sicherheitsdistanzen bzw. Sicherheitsbereichen zur Vergrößerung des Fahrraumes ist in diesem Dokument beschrieben. Optische, visuelle oder auch haptische Warnsignale können ausgegeben werden, wobei auch ein Verkleinern des Fahrraumes, beispielsweise durch ein Einklappen der Seitenspiegel denkbar ist.

In der DE 10 2009 032541 A1 ist ein Verfahren und eine Vorrichtung zur Vermeidung einer Kollision eines Fahrzeuges mit anderen Objekten beschrieben, bei welchen Sensoren eine Lage eines Objektes in der Umgebung des Fahrzeuges erfassen und den Abstand zwischen dem Objekt und dem Fahrzeug berechnen. Der berechnete Abstand wird dann dem Fahrer angezeigt bzw. ein Warnsignal wird bei einer drohenden Kollision erzeugt. Auch eine zukünftige Position eines sich beispielsweise zudem beweglichen Objektes kann berechnet werden, wenn sich das Objekt nicht mehr im Sensorerfassungsbereich befindet.

Außen an einem Fahrzeug angebrachte Objekte, wie zum Beispiel Außenspiegel Antennen oder Dachaufbauten, stellen besonders gefährdete Teile des Fahrzeuges dar. Sie bilden den äußersten Rand des Fahrzeuges, wodurch sie durch mögliche Kollisionen mit Objekten am meisten gefährdet sind. In bekannten Kollisionswarnsystemen wird jedoch nur sehr allgemein auf das gesamte Fahrzeug bezogen eine Kollisionswarnung ausgegeben. Durch diese unspezifischen Warnungen werden oftmals unnötig große Ausweichmanöver und/oder Bremsmanöver durch den Fahrer veranlasst, da dieser die Kollisionsgefahr nicht zuordnen kann.

### OFFENBARUNG DER ERFINDUNG

Es ist daher Aufgabe der Erfindung, die voranstehend beschriebenen Nachteile bekannter Kollisionswarnsysteme von Fahrzeugen zumindest teilweise zu beheben. Insbesondere ist es Aufgabe der vorliegenden Erfindung, ein Verfahren zum Schutz eines außen an einem Fahrzeug angeordneten Objektes sowie eine Vorrichtung zum Schutz eines außen an einem Fahrzeug angeordneten Objektes bereitzustellen, welche in einfacher und kostengünstiger Weise mögliche Kollisionen eines außen an einem Fahrzeug angeordnetes Objektes mit Hindernissen feststellen bzw. vor diesen warnen und/oder diese verhindern.

Die voranstehende Aufgabe wird gelöst durch ein Verfahren mit den Merkmalen des unabhängigen Anspruchs 1 sowie durch eine Vorrichtung mit den Merkmalen des unabhängigen Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung und jeweils umgekehrt, so dass bezüglich der Offenbarung zu den einzelnen Erfindungsaspekten stets wechselseitig Bezug genommen wird bzw. werden kann.

In einem ersten Aspekt der Erfindung wird die Aufgabe durch ein Verfahren zum Schutz eines außen an einem Fahrzeug angeordneten Objektes gelöst.

Insbesondere wird das Verfahren dabei durch folgende Verfahrensschritte gekennzeichnet:
a) Detektion einer Position eines Hindernisses, im Umfeld des Fahrzeuges durch ein geeignetes Sensorsystem
b) Ermittlung der Fahrbewegung des Fahrzeuges,
c) Berechnung eines Fahrschlauches für das außen am Fahrzeug angeordnete Objekt,
d) Ermittlung einer möglichen Kollision des außen am Fahrzeug angeordneten Objektes mit dem Hindernis durch Abgleichung des Fahrschlauches mit der Position des Hindernisses.

Durch das erfindungsgemäße Verfahren können mögliche Kollisionen des außen am Fahrzeug angeordneten Objektes mit Hindernissen erkannt werden. Ein außen am Fahrzeug angeordnetes Objekt kann dabei zum Beispiel ein Außenspiegel, eine Antenne, ein Dachaufbau oder eine außen am Fahrzeug angeordnete Werbetafel oder dergleichen sein. Für die Detektion eines Hindernisses ist dabei im Fahrzeug ein Sensorsystem vorgesehen. Das Sensorsystem kann dabei beispielsweise Ultraschall-, Laser-, Radar- und/oder Kamerasensoren aufweisen. Durch die Detektion der Position des Hindernisses ist die relative Position des Hindernisses in Bezug auf das Fahrzeug bekannt. Die im Schritt b) durchgeführte Ermittlung der Fahrbewegung des Fahrzeuges ermöglicht die Einschätzung der Relevanz des Hindernisses. So ist ein Hindernis umso relevanter, je mehr sich das Fahrzeug auf das Hindernis zubewegt. Für die Ermittlung der Fahrbewegung des Fahrzeugs können dabei Fahrzeuginformationen, wie zum Beispiel Lenkeinschlag und/oder die Geschwindigkeit des Fahrzeugs, ausgewertet werden. Die Fahrzeuginformationen können dabei beispielsweise durch Zugriff auf die Fahrzeugelektronik oder durch spezielle Sensoren ermittelt werden. Im Schritt c) des Verfahrens wird ein Fahrschlauch für das außen am Fahrzeug angeordnete Objekt berechnet. Der Fahrschlauch umfasst dabei den Teil der Umgebung in Fahrtrichtung des Fahrzeuges, in dem sich das außen am Fahrzeug angeordnete Objekt in naher Zukunft befinden wird. Dafür ist das Wissen über die Positionierung und die Abmessungen des außen am Fahrzeug angeordneten Objektes nötig. Zusammen mit der in Schritt b) ermittelten Fahrbewegung des Fahrzeuges wird aus diesen Informationen der Fahrschlauch für das außen am Fahrzeug angeordnete Objekt berechnet. In Schritt d) wird der in Schritt c) berechnete Fahrschlauch mit der in Schritt a) des Verfahrens detektierten Position des Hindernisses abgeglichen. Bei einer Überschneidung des Fahrschlauches mit dem Hindernis kann es bei Beibehaltung der Fahrbewegung zu einer Kollision des außen am Fahrzeug angeordneten Objektes mit dem Hindernis kommen. Bei einer Erkennung einer möglichen Kollision können anschließend Maßnahmen zur Verhinderung dieser Kollision ergriffen werden. Um eine noch größere Sicherheit zu erreichen, kann der Fahrschlauch für das außen am Fahrzeug angeordnete Objekt mit Sicherheitstoleranzen ausgestaltet sein. Das bedeutet, dass der Fahrschlauch nicht nur für das außen am Fahrzeug angeordnete Objekt, sondern für einen das Objekt umgebenden Bereich berechnet wird, welcher größere Ausmaße als das außen am Fahrzeug angeordnete Objekt aufweist. Dadurch kann automatisch ein gewisser Sicherheitsabstand zwischen dem Hindernis und dem außen am Fahrzeug angeordneten Objekt sichergestellt werden. Hierdurch wird die Fahrsicherheit nochmals erhöht. Durch ein erfindungsgemäßes Verfahren wird somit eine mögliche Kollision des außen am Fahrzeug angeordneten Objektes mit einem Hindernis frühzeitig erkannt, wodurch Maßnahmen zum Verhindern dieser Kollision ergriffen werden können. Das außen am Fahrzeug angeordnete Objekt wird somit vor einer Kollision geschützt.

Ferner kann bei einem erfindungsgemäßen Verfahren vorgesehen sein, dass für die Ermittlung der Fahrbewegung des Fahrzeuges ein Lenkeinschlag, eine Geschwindigkeit, eine Beschleunigung und/oder eine Position des Fahrzeuges ausgewertet werden. Die Fahrbewegung des Fahrzeuges ist die erwartete Weiterführung der derzeitigen Fahrt des Fahrzeuges. Dafür werden Fahrzeuginformationen, wie zum Beispiel Lenkeinschlag, Geschwindigkeit und/oder Beschleunigung des Fahrzeuges ausgewertet und für die zukünftige Fahrt des Fahrzeuges extrapoliert. Ferner kann auch eine Position des Fahrzeuges zur Ermittlung der Fahrbewegung herangezogen werden. Dabei wird beispielsweise eine Navigationsinformation herangezogen, um die Position des Fahrzeuges zu bestimmen. Insbesondere wird dafür beispielsweise ein Navigations-/ oder GPS-Signal ausgewertet. Die Navigationsinformation kann insbesondere auch den Straßenverlauf an der aktuellen Position beinhalten. Dies kann ebenfalls zur Vorausberechnung der Fahrbewegung des Fahrzeuges verwendet werden. Auch eine Auswertung weiterer Fahrzeuginformationen, wie zum Beispiel das Setzen eines Blinkers oder frühere Fahrbewegungen können, insbesondere in Verbindung mit der Position des Fahrzeuges, zur Ermittlung der Fahrbewegung des Fahrzeuges herangezogen werden. So lässt beispielsweise ein gesetzter Blinker auf einen Abbiegevorgang schließen, noch bevor ein Lenkeinschlag erfolgt. Auch ist zum Beispiel bei Erreichen der heimischen Garage ein Verlassen der Straße hin zur Garage wahrscheinlich. Durch die Ermittlung der Fahrbewegung des Fahrzeuges aus möglichst vielen Informationen ergibt sich eine genauere Vorausberechnung der Fahrbewegung. Dieses erhöht die Voraussagekraft und somit die Genauigkeit, mit der mögliche Kollisionen des außen am Fahrzeug angebrachten Objektes mit Hindernissen vorhergesagt werden können.

Darüber hinaus kann bei dem erfindungsgemäßen Verfahren vorgesehen sein, dass die Position des detektierten Hindernisses berechnet wird, wenn es sich außerhalb der Reichweite der Fahrzeugsensoren befindet. Dadurch kann sichergestellt werden, dass die Kollisionsgefahr, die von einem detektierten Hindernis ausgeht, nicht übersehen wird, selbst wenn sich das Hindernis außerhalb der Reichweite der Fahrzeugsensoren befindet. Dieses kann insbesondere dann passieren, wenn die Fahrzeugsensoren beispielsweise einen Sensorbereich aufweisen, der nur nach vorne gerichtet ist. Die Position des detektierten Hindernisses relativ zum Fahrzeug wird dabei aus der gemessenen Position des detektierten Hindernisses und der Fahrbewegung des Fahrzeuges berechnet. Diese Informationen sind aus den Schritten a) und b) des erfindungsgemäßen Verfahrens bekannt. Ein Übersehen eines Hindernisses, das detektiert wurde, und sich später außerhalb der Reichweite der Fahrzeugsensoren befindet, ist somit nicht möglich oder zumindest erschwert. Die Sicherheit und der Schutz des außen am Fahrzeug angeordneten Objektes kann somit nochmals gesteigert werden.

Bei einem erfindungsgemäßen Verfahren kann ferner vorgesehen sein, dass die Höhe des detektierten Hindernisses beim Abgleichen in Schritt d) des Verfahrens berücksichtigt wird. Dadurch kann sichergestellt werden, dass keine unnützen Kollisionswarnungen ausgegeben werden. Die Position am Fahrzeug und die Ausdehnung des außen am Fahrzeug angeordneten Objektes sind bekannt. Insbesondere wenn das außen am Fahrzeug angeordnete Objekt zum Beispiel seitlich am Fahrzeug angebracht ist, kann es möglich sein, dass es sich nur auf einer gewissen Höhe des Fahrzeuges befindet. Dies ist zum Beispiel bei Außenspiegeln der Fall. Objekte in Fahrtrichtung, die diese Höhe beispielsweise nicht erreichen, stellen somit auch keine Kollisionsgefahr dar. Durch die Berücksichtigung der Höhe des detektierten Hindernisses beim Abgleichen kann in einem solchen Fall eine unnötige Kollisionswarnung vermieden werden. Ein Beispiel hierfür stellen Parkplatzbegrenzungen geringer Höhe dar, die zu niedrig sind, um mit einem Außenspiegel des Fahrzeuges zu kollidieren. Auch können beispielsweise Äste von Bäumen über die Fahrbahn ragen. Ist in einem derartigen Fall die lichte Höhe der Äste über der Fahrbahn groß genug, dass das Fahrzeug und alle außen am Fahrzeug angebrachten Objekte gefahrlos passieren können, wird durch die Berücksichtigung der Höhe des detektierten Hindernisses beim Abgleichen keine unnötige Kollisionswarnung ausgegeben.

In einer besonders bevorzugten Ausgestaltungsform eines erfindungsgemäßen Verfahrens kann vorgesehen sein, dass bei Ermittlung einer möglichen Kollision eine akustische und/oder optische und/oder haptische Warnung ausgegeben wird. Durch eine Warnung kann der Fahrer vor einer möglichen Kollision gewarnt werden. Dabei ist es beispielsweise möglich, ein akustisches Warnsignal auszugeben. Dieses Warnsignal kann dabei insbesondere in der Tonhöhe, Tonfolge, Lautstärke und/oder räumlichen Abgabe derart ausgestaltet sein, das deutlich wird, an welcher Stelle des Fahrzeugs vor einer möglichen Kollision gewarnt wird und/oder wie dringlich die Warnung ist. Eine optische Warnung kann insbesondere beispielsweise durch eine LED oder eine andere Lichtquelle oder Anzeigemittel erzeugt werden. Insbesondere kann vorgesehen sein, dass eine LED in einem Außenspiegel, welcher ein außen am Fahrzeug angeordnetes Objekt darstellt, angebracht ist. Im Falle einer möglichen Kollision kann diese LED diese Kollisionswarnung durch ein Leuchten und/oder Blinken anzeigen. Auch die Verwendung von bereits verbauten LEDs, beispielsweise eine LED zur Warnung für Objekte im toten Winkel des Fahrzeuges, können verwendet werden. Ferner ist auch eine Anzeige auf einem Bildschirm denkbar. Eine haptische Warnung kann beispielsweise durch eine Vibration des Lenkrades an den Fahrer ausgegeben werden. Dabei kann insbesondere die Position der Vibration am Lenkrad die Position des außen am Fahrzeug angeordneten Objektes widerspiegeln. Durch die Ausgabe einer Warnung an den Fahrer wird der Fahrer über eine mögliche Kollision informiert. Er kann daraufhin die nötigen Ausweichmanöver einleiten und so die Kollision verhindern. Dadurch wir das außen am Fahrzeug angeordnete Objekt effektiv vor der Kollision geschützt.

Ferner kann bei einem erfindungsgemäßen Verfahren vorgesehen sein, dass das außen am Fahrzeug angeordnete Objekt mechanisch aus einem Gefahrenbereich entfernt wird. So kann insbesondere ein Außenspiegel des Fahrzeuges über einen Klappmotor verfügen. Der Spiegel kann somit bei einer detektierten Kollisionsmöglichkeit an das Fahrzeug angeklappt und somit mechanisch aus dem Gefahrenbereich entfernt werden. Dieses stellt einen automatischen Schutz des außen am Fahrzeug angeordneten Objektes dar. Der Fahrer muss in einem solchen Fall nicht eingreifen. So kann zum Beispiel beim Einparken in sehr enge Parklücken ein mechanisches Entfernen von Vorteil sein, da ein Ausweichen in einem derartigen Fall oftmals nicht möglich ist. Ein Außenspiegel, der ansonsten beispielsweise mit einer Wand, die die Parklücke begrenzt, kollidieren würde, wird an das Fahrzeug angeklappt und ermöglicht so das Einparken in diese Parklücke ohne Beschädigung.

Gemäß einem zweiten Aspekt der Erfindung wird die Aufgabe durch eine Vorrichtung zum Schutz eines außen am Fahrzeug angeordneten Objektes, aufweisend zumindest ein Sensorsystem und eine Auswerteeinheit, gelöst. Insbesondere ist bei einer erfindungsgemäßen Vorrichtung vorgesehen, dass das zumindest eine Sensorsystem eine Position eines Hindernisses, im Umfeld des Fahrzeuges detektiert und die Fahrbewegung des Fahrzeuges ermittelt, dass die Auswerteeinheit basierend auf diesen Daten einen Fahrschlauch des außen am Fahrzeug angeordneten Objektes berechnet und diesen Fahrschlauch zur Ermittlung einer möglichen Kollision mit der Position des Hindernisses abgleicht. Das Sensorsystem der erfindungsgemäßen Vorrichtung weist dabei insbesondere Detektoren zur Überwachung der Umgebung des Fahrzeuges und somit zur Detektion des sich in der Umgebung des Fahrzeuges befindlichen Hindernisses auf. Als Detektoren sind dabei beispielsweise Ultraschall-, Radar-, Laser- oder Kamerasensoren denkbar. Ferner weist das Sensorsystem Mittel zur Auswertung von Fahrzeuginformationen auf. Die Fahrzeuginformationen, wie zum Beispiel ein Lenkeinschlag, eine Geschwindigkeit, eine Beschleunigung und/oder eine Position des Fahrzeuges werden dazu verwendet, die Fahrbewegung des Fahrzeuges zu ermitteln. In der Auswerteeinrichtung werden die Daten, das heißt zumindest die Position des Hindernisses, die Fahrbewegung des Fahrzeuges und die bekannte Position und Ausdehnung des außen am Fahrzeug angeordneten Objektes verwendet, um einen Fahrschlauch des außen am Fahrzeug angeordneten Objektes zu berechnen. Dieser Fahrschlauch wird mit der Position des Hindernisses abgeglichen. Eine Überschneidung des Fahrschlauches mit der Position des Hindernisses wird als eine mögliche Kollision detektiert. Bei einer erkannten Kollisionsmöglichkeit kann diese auch angezeigt und/oder Maßnahmen zur Kollisionsvermeidung ergriffen werden. Die Sicherheit und der Schutz des außen am Fahrzeug angeordneten Objektes werden dadurch erhöht. Kollisionen mit einem Hindernis und damit einhergehende Beschädigungen des außen am Fahrzeug angeordneten Objektes können so vermieden werden.

Ferner kann bei einer erfindungsgemäßen Vorrichtung vorgesehen sein, dass das außen am Fahrzeug angeordnete Objekt ein Außenspiegel ist. Außenspiegel stellen oftmals das am weitesten nach links und/oder rechts abstehende Fahrzeugteil dar. Sie sind daher für Kollisionen am gefährdetsten. Besonderer Schutz für Außenspiegel ist somit nötig. Durch eine erfindungsgemäße Vorrichtung kann dieser Schutz sichergestellt werden. So ist es beispielsweise möglich, den Fahrer vor einer möglichen Kollision mit einem Hindernis zu warnen und/oder, wenn der Außenspiegel beispielsweise einen Klappmotor aufweist, den Außenspiegel automatisch aus dem Gefahrenbereich wegzuklappen. Dadurch kann der Außenspiegel effektiv vor Kollisionen mit Hindernissen geschützt werden. Eine Antenne könnte vergleichsweise einfach eingefahren werden.

In einer besonders bevorzugten Ausgestaltung einer erfindungsgemäßen Vorrichtung kann vorgesehen sein, dass die Vorrichtung zur Ausführung eines Verfahrens gemäß dem ersten Aspekt der Erfindung ausgestaltet ist. Sämtliche Vorteile, die zu einem Verfahren gemäß dem ersten Aspekt der Erfindung beschrieben worden sind, ergeben sich somit selbstverständlich auch für eine erfindungsgemäße Vorrichtung, die zur Ausführung eines derartigen Verfahrens ausgestaltet ist.

### BEVORZUGTE AUSFÜHRUNGSBEISPIELE

Das erfindungsgemäße Verfahren und seine Weiterbildungen sowie deren Vorteile und die erfindungsgemäße Vorrichtung und ihre Weiterbildungen sowie deren Vorteile werden nachfolgend anhand von einer Zeichnung näher erläutert. Es zeigt schematisch:

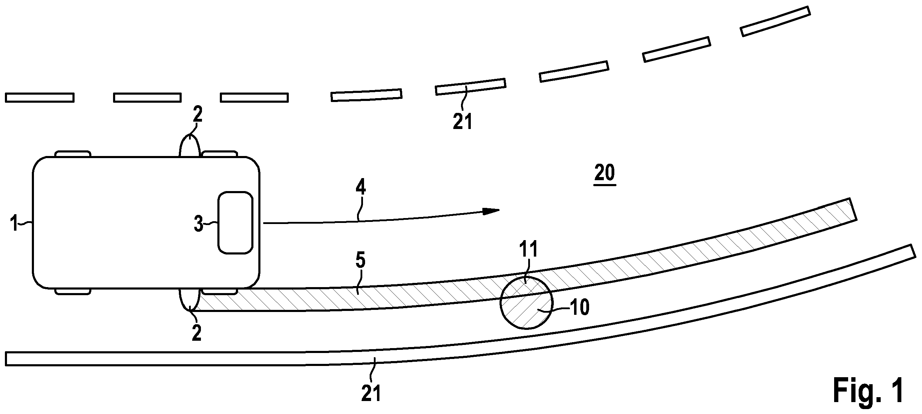

- Fig. 1: ein Fahrzeug mit einer erfindungsgemäßen Vorrichtung.

In der Fig. 1 ist ein Fahrzeug 1 mit einer erfindungsgemäßen Vorrichtung zum Schutz eines außen am Fahrzeug angeordneten Objektes gezeigt. Das außen am Fahrzeug angeordnete Objekt ist im gezeigten Beispiel der rechte Außenspiegel 2. Das Fahrzeug 1 befindet sich auf einer Fahrbahn 20, die durch Fahrbahnmarkierungen 21 begrenzt ist. Das Fahrzeug 1 weist ein Sensorsystem 3 auf. Das Sensorsystem 3 umfasst dabei insbesondere Sensoren zur Detektion von Hindernissen 10 wie zum Beispiel Ultraschall-, Radar-, Laser- und/oder Kamerasensoren. Im gezeigten Fall befindet sich das Hindernis 10 vor dem Fahrzeug 1 am Rand der Fahrbahn 20. Das Sensorsystem 3 weist ferner Mittel auf, um Fahrzeugdaten des Fahrzeuges 1 zu erfassen. Als Fahrzeugdaten werden dabei insbesondere die Lenkbewegungen, die Geschwindigkeit, die Beschleunigung und/oder die Position des Fahrzeuges 1 ermittelt. In einer Auswerteeinheit (nicht mit abgebildet) werden sämtliche Daten des Sensorsystems 3 gesammelt. Aus den Daten wird die Fahrbewegung 4 des Fahrzeuges 1 ermittelt. Zusammen mit der Fahrbewegung 4 wird aus der bekannten Position und Größe des außen am Fahrzeug 1 angeordneten Objektes, im dargestellten Fall des Außenspiegels 2, ein Fahrschlauch 5 für den Außenspiegel 2 berechnet. Im dargestellten Fall ist der Fahrschlauch 5 der Größe des Außenspiegels 2 angeglichen. Es ist jedoch auch möglich, den Fahrschlauch 5 mit einer Sicherheitstoleranz, das heißt leicht größer als die Dimension des Außenspiegels 2 auszugestalten. Daraus resultiert dann eine nochmals erhöhte Kollisionssicherheit, da ein Sicherheitsabstand bereits mit eingerechnet ist. Um eine Möglichkeit einer Kollision zu erkennen, gleicht die Auswerteeinheit den berechneten Fahrschlauch 5 des Außenspiegels 2 mit der Position des Hindernisses 10, die durch das Sensorsystem 3 detektiert worden ist, ab. Im vorliegenden Fall überschneidet sich das Hindernis 10 mit dem Fahrschlauch 5. Bei Detektion einer derartigen Kollisionszone 11 kann die erfindungsgemäße Vorrichtung eine Kollisionswarnung ausgeben. Diese kann akustisch und/oder optisch und/oder haptisch ausgestaltet sein. Der Fahrer des Fahrzeuges 1 kann daraufhin die nötigen Ausweichmanöver einleiten, um eine Kollision zu verhindern. Ferner ist, insbesondere bei Außenspiegeln 2, denkbar, den Außenspiegel 2 durch einen Klappmechanismus automatisch aus dem Gefahrenbereich zu entfernen. Auch in diesem Fall kann eine Kollision verhindert werden.

Schäden am Außenspiegel 2 des Fahrzeuges 1 können so vermieden werden. Auch Schäden an dem Hindernis 10 werden so vermieden.

## Patentansprüche

1. Verfahren zum Schutz eines außen an einem Fahrzeug (1) angeordneten Objektes, **gekennzeichnet durch** folgende Schritte:
a) Detektion einer Position eines Hindernisses (10), im Umfeld des Fahrzeugs (1) durch ein geeignetes Sensorsystem (3),
b) Ermittlung einer Fahrbewegung (4) des Fahrzeugs (1),
c) Berechnung eines Fahrschlauchs (5) für das außen am Fahrzeug (1) angeordnete Objekt aus der ermittelten Fahrbewegung (4) sowie einer Positionierung und Abmessung des außen am Fahrzeug (1) angeordneten Objektes,
d) Ermittlung einer möglichen Kollision des außen am Fahrzeug (1) angeordneten Objektes mit dem Hindernis (10) durch Abgleichen des Fahrschlauchs (5) mit der Position des Hindernisses (10).

2. Verfahren nach Anspruch 1, **dadurch gekennzeichnet, dass** für die Ermittlung der Fahrbewegung (4) des Fahrzeugs (1) ein Lenkeinschlag, eine Geschwindigkeit, eine Beschleunigung und/oder eine Position des Fahrzeugs (1) ausgewertet werden.

3. Verfahren nach wenigstens einem der Ansprüche 1 oder 2, **dadurch gekennzeichnet, dass** die Position des detektierten Hindernisses (10) berechnet wird, wenn es sich außerhalb der Reichweite der Fahrzeugsensoren (3) befindet.

4. Verfahren nach wenigstens einem der Ansprüche 1 bis 3, **dadurch gekennzeichnet, dass** die Höhe des detektierten Hindernisses (10) beim Abgleichen berücksichtigt wird.

5. Verfahren nach wenigstens einem der Ansprüche 1 bis 4, **dadurch gekennzeichnet, dass** bei Ermittlung einer möglichen Kollision eine akustische und/oder optische und/oder haptische Warnung ausgegeben wird.

6. Verfahren nach wenigstens einem der Ansprüche 1 bis 5, **dadurch gekennzeichnet, dass** das außen an einem Fahrzeug (1) angeordnete Objekt mechanisch aus einem Gefahrenbereich entfernt wird.

7. Vorrichtung zum Schutz eines außen an einem Fahrzeug (1) angeordneten Objektes, aufweisend zumindest ein Sensorsystem (3) und eine Auswerteeinheit, **dadurch gekennzeichnet, dass** das zumindest eine Sensorsystem (3) eine Position eines Hindernisses (10) im Umfeld des Fahrzeugs (1) detektiert und die Fahrbewegung (4) des Fahrzeugs (1) ermittelt, dass die Auswerteeinrichtung basierend auf diesen Daten sowie einer Positionierung und Abmessung des außen am Fahrzeug (1) angeordneten Objektes einen Fahrschlauch (5) des außen an dem Fahrzeug (1) angeordneten Objektes berechnet und diesen Fahrschlauch (5) zur Ermittlung einer möglichen Kollision mit der Position des Hindernisses (10) abgleicht.

8. Vorrichtung nach Anspruch 7, **dadurch gekennzeichnet, dass** das außen an dem Fahrzeug (1) angeordnete Objekt ein Außenspiegel (2) ist.

9. Vorrichtung nach wenigstens einem der Ansprüche 7 oder 8, **dadurch gekennzeichnet, dass** die Vorrichtung zur Ausführung eines Verfahrens nach wenigstens einem der Ansprüche 1 bis 6 ausgestaltet ist.

## Claims

1. method for protecting an object arranged on the outside of a vehicle (1), **characterized by** the following steps:
a) detecting a position of an obstacle (10) in the surroundings of the vehicle (1) by means of a suitable sensor system (3),
b) determining a travel movement (4) of the vehicle (1),
c) calculating a driving tube (5) for the object arranged on the outside of the vehicle (1), from the determined travel movement (4) and positioning, and determining the dimensions of the object arranged on the outside of the vehicle (1),
d) determining a possible collision of the object arranged on the outside of the vehicle (1) with the obstacle (10) by comparing the driving tube (5) with the position of the obstacle (10).

2. Method according to Claim 1, **characterized in that** a steering lock value, a speed, an acceleration and/or a position of the vehicle (1) are evaluated for the determination of the travel movement (4) of the vehicle (1).

3. Method according to at least one of Claims 1 and 2, **characterized in that** the position of the detection obstacle (10) is calculated if it is located outside the range of the vehicle sensors (3).

4. Method according to at least one of Claims 1 to 3, **characterized in that** the height of the detected obstacle (10) is taken into account in the comparison.

5. Method according to at least one of Claims 1 to 4, **characterized in that** an acoustic and/or visual and/or haptic warning is output when a possible collision is determined.

6. Method according to at least one of Claims 1 to 5, **characterized in that** the object arranged on the outside of a vehicle (1) is removed mechanically from a hazardous area.

7. Device for protecting an object arranged on the outside of a vehicle (1), comprising at least one sensor system (3) and one evaluation unit, **characterized in that** the at least one sensor system (3) detects a position of an obstacle (10) in the surroundings of the vehicle (1) and determines the travel movement (4) of the vehicle (1), **in that** the evaluation unit calculates, on the basis of these data and positioning and determination of the dimensions of the object arranged on the outside of the vehicle (1), a driving tube (5) of the object arranged on the outside of the vehicle (1) and compares this driving tube (5) with the position of the obstacle (10) in order to determine a possible collision.

8. Device according to Claim 7, **characterized in that** the object arranged on the outside of the vehicle (1) is an exterior rear-view mirror (2).

9. Device according to at least one of Claims 7 and 8, **characterized in that** the device is configured to carry out a method according to at least one of Claims 1 to 6.

## Revendications

1. Procédé pour protéger un objet disposé à l'extérieur sur un véhicule (1), **caractérisé par** les étapes suivantes :
a) détection d'une position d'un obstacle (10) dans l'environnement du véhicule (1) par un système de capteur (3) approprié,
b) détermination d'un mouvement de déplacement (4) du véhicule (1),
c) calcul d'une trajectoire de déplacement (5) pour l'objet disposé à l'extérieur sur le véhicule (1) à partir du mouvement de déplacement (4) déterminé ainsi que d'un positionnement et des dimensions de l'objet disposé à l'extérieur sur le véhicule (1),
d) détermination d'une possibilité de collision de l'objet disposé à l'extérieur sur le véhicule (1) avec l'obstacle (10) en comparant la trajectoire de déplacement (5) avec la position de l'obstacle (10).

2. Procédé selon la revendication 1, **caractérisé en ce qu'**un braquage de direction, une vitesse, une accélération et/ou une position du véhicule (1) sont interprétés pour la détermination du mouvement de déplacement (4) du véhicule (1).

3. Procédé selon au moins l'une des revendications 1 ou 2, **caractérisé en ce que** la position de l'obstacle (10) détecté est calculée lorsqu'il se trouve en-dehors de la portée des capteurs de véhicule (3).

4. Procédé selon au moins l'une des revendications 1 à 3, **caractérisé en ce que** la hauteur de l'obstacle (10) détecté est prise en compte lors de la comparaison.

5. Procédé selon au moins l'une des revendications 1 à 4, **caractérisé en ce qu'**une alerte sonore et/ou visuelle et/ou haptique est émise en cas de détermination d'une possibilité de collision.

6. Procédé selon au moins l'une des revendications 1 à 5, **caractérisé en ce que** l'objet disposé à l'extérieur sur le véhicule (1) est enlevé mécaniquement hors d'une zone de danger.

7. Dispositif pour protéger un objet disposé à l'extérieur sur un véhicule (1), possédant au moins un système de capteur (3) et une unité d'interprétation, **caractérisé en ce que** l'au moins un système de capteur (3) détecte une position d'un obstacle (10) dans l'environnement du véhicule (1) et détermine le mouvement de déplacement (4) du véhicule (1), **en ce que** le dispositif d'interprétation, en se basant sur ces données ainsi que sur un positionnement et des dimensions de l'objet disposé à l'extérieur sur le véhicule (1), calcule une trajectoire de déplacement (5) de l'objet disposé à l'extérieur sur le véhicule (1) et compare cette trajectoire de déplacement (5) avec la position de l'obstacle (10) en vue de déterminer une possibilité de collision.

8. Dispositif selon la revendication 7, **caractérisé en ce que** l'objet disposé à l'extérieur sur le véhicule (1) est un rétroviseur extérieur (2).

9. Dispositif selon au moins l'une des revendications 7 ou 8, **caractérisé en ce que** le dispositif est configuré pour mettre en oeuvre un procédé selon au moins l'une des revendications 1 à 6.
